# EUROPEAN PATENT SPECIFICATION

(11) **EP 0 410 941 B1**
(45) Date of publication and mention of the grant of the patent: **28.09.1994**
(21) Application number: 90830328.2
(22) Date of filing: 17.07.1990
(51) Int. Cl.: F16F 7/10, B60K 5/12

(54) **A resilient mounting with a built-in phase shifter, particularly for motor vehicle engines**
Elastisches Auflager mit eingebautem Phasenverschieber, insbesondere für Kraftfahrzeugmotoren
Support élastique avec déphaseur incorporé, en particulier pour moteurs de véhicules

(30) Priority: 26.07.1989 IT 6763489
(43) Date of publication of application: 30.01.1991
(73) Proprietor: FIAT AUTO S.p.A., 10135 Torino (IT); P.S.A. SISTEMI ANTIVIBRANTI S.p.A., 25050 PASSIRANO (Brescia) (IT)
(72) Inventor: Manea, Valentino, I-10099 San Mauro Torinese, (Torino) (IT); Casula, Francesco, I-10131 Torino (IT); Cerruti Mauro, I-20141 Milano (IT); Vanessi Giovanni, I-20099 Sesto San Giovanni Milano (IT)
(74) Representative: Quinterno, Giuseppe

(56) References cited:
- EP-A- 0 040 327
- FR-A- 2 449 826
- US-A- 3 128 978

## Description

The present invention relates to a resilient mounting, particularly for motor vehicle engines, of the type defined in the first part of Claim 1.

A resilient mounting of this kind is disclosed in US-A-3 128 978. This mounting includes an auxiliary resilient system comprising a single rigid annular element disposed coaxial with an external tubular support body to be secured to a supporting structure and with an internal rod to be attached to the suspended body. The rigid annular element is connected to the rod and the tubular support body by means of two resilient ring elements. A cylindrical elastomeric block is axially interposed between the end surface of the rod and the support body.

This type of mounting may be used where there is a problem in insulating a body against transmitted vibrations in order to reduce induced noice. In the specific field of use in motor vehicles, it is found that in some cases, usually when the engine is operating in the range of between approximately 3000 and 5000 revolutions/minute, the insulating effect of conventional resilient blocks is not sufficient to attenuate the forces transmitted by the engine to the body in the corresponding frequency band of 100 to 170 Hz which is most critical as regards noise in the passenger compartment.

The object of the present invention is to provide a resilient mounting of the type specified at the beginning of the description, which enables this problem to be resolved by a drastic reduction in the vibrations transmitted to the body in the frequency range mentioned above.

According to the invention, this object is achieved by a resilient mounting having the features defined in Claim 1.

By virtue of these characteristics, the reduction of the vertical forces transmitted to the body can reach values of 75% in the predetermined frequency range, considerably reducing the noise in the passenger compartment and thus increasing the comfort of the users.

Further characteristics and advantages of the mounting according to the invention will become clear from the detailed description which follows with reference to the appended drawings, provided by way of non-limiting example, in which:
Figure 1 is a cross-section of a vibration-damping mounting according to the present invention, and
Figure 2 is a diagram of the equivalent model.

With reference to the drawings, a vibration-damping mounting, generally indicated 10, is interposed between the body S of a motor vehicle and a support bracket A of the engine of the motor vehicle. The vibration-damping mounting 10 comprises a tubular body 11 with a first end 11a which is formed with a flange for fixing to the body S at 12 and a second end 11b to which a cup-shaped cover 13 with a central hole 13a is fixed, for example, by means of plastic deformation. A metal rod 14 is mounted coaxially with the tubular body 11 and has a first threaded end 14a screwed into a corresponding threaded hole 15a in a nut-like element 15, and a second end 14b which is fixed to the bracket A. A shaped annular block 16 of elastomeric material is fixed (for example, by means of vulcanisation) to the nut-like element 15 and has an outer edge which is joined to the tubular body 11 substantially adjacent its first end 11a.

A metal bush 17 is mounted on the rod 14 adjacent its threaded end 14a and has a first end 17a which abuts an annular shoulder 14c of the rod 14 and a second shaped end 17b which abuts the element 15. A shaped, auxiliary annular block 18 of elastomeric material is fixed to the bush 17 and has an outer peripheral edge 18a which is fixed inside a bent L-shaped edge 13b of the cover 13.

Two metal rings, 19 and 20 respectively, are fixed to the auxiliary annular block 18 coaxially with the rod 14 and are spaced axially from each other and radially from the rod and the tubular body 11. The metal rings 19 and 20, which are quadrangular in section, therefore divide the auxiliary annular block 18 into three regions 18b (interposed between the bush 17 and the first metal ring 19), 18c (interposed between the two metal rings 19 and 20) and 18d (interposed between the second metal ring 20 and the cover 13) respectively.

A tubular spacer element 21 is interposed between the bush 17 and the support bracket A, coaxially with the rod 14, and has an external diameter smaller than the internal diameter of the hole 13a in the cover 13.

The tubular body 11 and the cover 13 have respective through-holes 22 and 23 whose function will be explained in the description below.

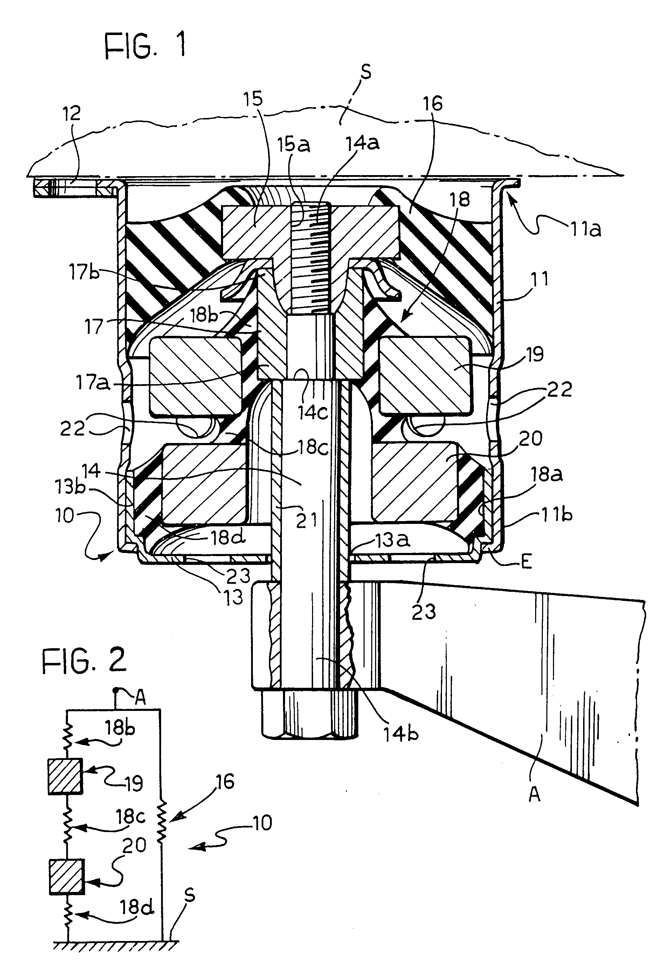

In order to assemble the vibration-damping mounting 10, it is sufficient to fix the cover 13 to the tubular body 11, for example, by the plastic deformation of its edge indicated E in Figure 1, in correspondence with the end 11b of the tubular body 11, and then, after the spacer 21 has been mounted, to screw the rod 14 to the element 15 which is fixed centrally to the shaped annular block 16.

When the engine is running, as regards the transmission of vibrations to the body, the vibration-damping mounting 10 behaves according to the equivalent model shown in Figure 2, in which the main elements of the model (springs, masses) have been indicated by the same reference numerals as used in Figure 1. The vibrations of the engine cause the periodic displacement of the support bracket A relative to the body S, thus causing the resilient deformation of the main resilient annular block 16 (of predetermined rigidity) and the transmission of a corresponding force to the body S.

The suitable dimensioning of the masses 19 and 20 (the metal rings) and the rigidities of the springs (the portions 18b, 18c, 18d of the auxiliary resilient annular block 18) gives rise to a new force which is transmitted to the body S with a phase displacement of approximately 180° relative to the first. In other words, the left-hand portion of the equivalent model shown in Figure 2 acts as a "phase shifter" relative to the right-hand portion which is constituted by the main resilient annular block 16. The total force which causes the body S to vibrate is thus reduced. This effect is limited to a frequency band between the characteristic frequencies of the phase shifter constituted by the auxiliary resilient annular block 18 and the metal rings 19 and 20.

During the tests carried out on vibration-damping mountings according to the invention, the vertical forces transmitted to the body were reduced by approximately 75% compared with those transmitted with conventional vibration-damping mountings for excitation frequencies between 75 and 180 Hz. The tests were carried out on an engine of average cubic capacity (1400 cm³) with the masses (the metal rings) having a total weight of approximately 1 kg and the various portions of the auxiliary resilient annular block 18 having rigidities of between 20 and 60 kg/mm.

Since the performance of the mounting depends, to a great extent, on the masses of the rings 19 and 20, this performance can be optimised by varying the masses, even when the mounting is already assembled, for example, by the removal of a predetermined quantity of metal from the rings 19 and 20 by drilling through the through-holes 22 and 23 provided in correspondence with the tubular element 11 and the cover 13.

The main resilient annular block 16 may have apertures of various shapes in order to optimise the radial transmission of the vibrations in predetermined directions.

## Claims

1. A resilient mounting, particularly for motor vehicle engines, of the type including a tubular body (11) which is adapted for connection to the body (S) of the motor vehicle, a rod (14) which is coaxial with the tubular body (11) and is adapted for connection to the engine, and vibration damping means (16, 20, 18) which are interposed between the tubular body (11) and the rod (14), and include a main resilient block (16) and an auxiliary resilient system (20, 19, 18) comprising a rigid annular element (20) which is coaxial with the rod (14) and is connected to the tubular body (11) and the rod (14) by means of two elastomeric elements (18d, 18c), the components of the main resilient block (16) and the auxiliary resilient system (20, 19, 18) being selected so as to introduce to the tubular body (11) dynamic forces which are in counterphase with those introduced by the main resilient block (16) in a predetermined frequency range;
characterised in that
the auxiliary resilient system (19, 20, 18) includes at least one pair of rigid annular elements (19, 20) which are coaxial with the rod (14) and which are connected to each other, to the tubular body (11) and the rod (14) by means of at least three elastomeric elements (18c, 18d, 18b) whose rigidity is selected so as to introduce to the tubular body (11) dynamic forces which are in counterphase with those introduced by the main resilient block (16) in the predetermined frequency range; in that the connection between the main block (16), the auxiliary resilient system (19, 20, 18) and the rod (14) is effected substantially in correspondence with a first end (14a) of the latter which is opposite a second end (14b) for fixing to the engine (A); and in that the main block (16) is connected to one end (11a) of the tubular body (11), said end (11a) of which is adjacent the first end (14a) of the rod (14), and the resilient system (19, 20, 18) is connected to the opposite end (11b) of the tubular body (11).

2. A mounting according to Claim 1, characterised in that the said elastomeric elements (18b, 18c, 18d) are annular.

3. A mounting according to Claim 1, characterised in that the tubular body (11) has a cover (13) which has a central hole for the passage of the rod (14) and is fitted to the body (11) in correspondence with the opposite end (11b) thereof from the end (11a) which is fixed to the body (S), the cover (13) having a bent, L-shaped outer edge (13b) to the inside of which the auxiliary resilient system (18) is fixed.

4. A mounting according to Claims 1 and 3, characterised in that the first end (14a) of the rod (14) is threaded and is screwed into a metal connecting element (15) fixed centrally to the main resilient block (16), an auxiliary, metal connecting element (17) being fixed centrally to the auxiliary resilient system (18) and being adapted to be clamped between an annular shoulder (14c) of the rod and the metal connecting element (15) when the mounting (10) is assembled.

5. A mounting according to Claims 3 and 4, characterised in that the tubular body (11) and/or the cover (13) have holes (22, 23) for enabling the mechanical removal of portions of material from the rigid annular elements (19, 20) after the assembly of the mounting (10), in order to vary their weight and to optimise the frequency response of the mounting to the vibrations transmitted by the engine to the body (S).

## Patentansprüche

1. Elastische, insbesondere für Kraftfahrzeugmotoren bestimmte, Befestigungseinrichtung mit einem rohrförmigen Körper (11), welcher zur Befestigung an der Karosserie (S) des Kraftfahrzeuges bestimmt ist, einem Stößel (14), welcher koaxial zum rohrförmigen Körper (11) ist und zur Befestigung am Motor bestimmt ist, und Schwingungsdämpfungsmitteln (16, 20, 18), welche zwischen dem rohrförmigen Körper (11) und dem Stößel (14) angeordnet sind und die einen elastischen Hauptblock (16) sowie ein elastisches Hilfssystem (20, 19, 18) aufweisen, das ein starres Ringelement (20) umfaßt, welches koaxial zum Stößel (14) ist und mit dem rohrförmigen Körper (11) sowie dem Stößel (14) mittels zweier elastomerer Elemente (18d, 18c) verbunden ist, wobei die Komponenten des elastischen Hauptblockes (16) und des elastischen Hilfssystems (20, 19, 18) so ausgewählt sind, daß sie in einem vorgegebenen Frequenzbereich auf den rohrförmigen Körper (11) dynamische Kräfte aufbringen, die in Gegenphase zu denen sind, die durch den elastischen Hauptblock (16) aufgebracht werden, dadurch **gekennzeichnet**, daß das elastische Hilfssystem (19, 20, 18) wenigstens zwei starre Ringelemente (19, 20) aufweist, welche koaxial zum Stößel (14) sind und welche miteinander, mit dem rohrförmigen Körper (11) und dem Stößel (14) mittels wenigstens dreier elastomerer Elemente (18c, 18d, 18b) verbunden sind, deren Steifigkeit so ausgewählt ist, daß sie in dem vorgegebenen Frequenzbereich auf den rohrförmigen Körper (11) dynamische Kräfte aufbringen, welche in Gegenphase zu denen sind, die durch den elastischen Hauptblock (16) aufgebracht werden, daß die Verbindung zwischen dem Hauptblock (16), dem elastischen Hilfssystem (19, 20, 18) und dem Stößel (14) im wesentlichen im Bereich eines ersten Endes (14a) des letzteren hergestellt ist, welches einem zweiten Ende (14b) zum Befestigen am Motor (A) abgewandt ist, und daß der Hauptblock (16) mit einem Ende (11a) des rohrförmigen Körpers (11) verbunden ist, wobei dieses Ende (11a) desselben dem ersten Ende (14a) des Stößels (14) benachbart ist und das elastische System (19, 20, 18) mit dem abgewandten Ende (11b) des rohrförmigen Körpers (11) verbunden ist.

2. Befestigungseinrichtung nach Anspruch 1, dadurch **gekennzeichnet**, daß die elastomeren Elemente (18b, 18c, 18d) ringförmig sind.

3. Befestigungseinrichtung nach Anspruch 1, dadurch **gekennzeichnet**, daß der rohrförmige Körper (11) einen Deckel (13) hat, welcher eine zentrale Öffnung für den Durchtritt des Stößels (14) aufweist und am Körper (11) im Bereich des dem an der Karosserie (S) befestigten Ende (11a) abgewandten Endes (11b) angeordnet ist, wobei der Deckel (13) eine abgebogene, L-förmige Außenkante (13b) aufweist, an deren Innenseite das elastische Hilfssystem (18) befestigt ist.

4. Befestigungseinrichtung nach Anspruch 1 und 3, dadurch **gekennzeichnet**, daß das erste Ende (14a) des Stößels (14) mit einem Gewinde versehen ist und in ein metallisches Verbindungselement (15) eingeschraubt ist, welches am elastischen Hauptblock (16) zentral befestigt ist, wobei ein metallisches Hilfs-Verbindungselement (17) zentral am elastischen Hilfssystem (18) befestigt und dazu ausgelegt ist, zwischen einer Ringschulter (14c) des Stößels und dem metallischen Verbindungselement (15) eingespannt zu werden, wenn die Befestigungseinrichtung (10) montiert wird.

5. Befestigungseinrichtung nach den Ansprüchen 3 und 4, dadurch **gekennzeichnet**, daß der rohrförmige Körper (11) und/oder der Deckel (13) Löcher (22, 23) aufweisen, die ein mechanisches Entfernen von Materialmengen von den starren Ringelementen (19, 20) nach der Montage der Befestigungseinrichtung (10) ermöglichen, um deren Gewicht zu verändern und die Antwortfrequenz der Befestigungseinrichtung auf die durch den Motor auf die Karosserie (S) übertragenen Schwingungen zu optimieren.

## Revendications

1. Montage élastique, particulièrement pour des moteurs de véhicules automobiles, du type incluant un corps tubulaire (11) qui est conçu pour être lié à la carrosserie (S) du véhicule automobile, une tige (14) qui est coaxiale avec le corps tubulaire (11) et qui est conçue pour être liée au moteur, et des moyens amortisseurs de vibrations (16, 20, 18) qui sont interposés entre le corps tubulaire (11) et la tige (14), et qui comprennent un bloc élastique principal (16) et un système élastique auxiliaire (20, 19, 18) comprenant un élément annulaire rigide (20) qui est coaxial avec la tige (14) et qui est lié au corps tubulaire (11) et à la tige (14) au moyen de deux éléments élastomères (18d, 18c), les composants du bloc élastique principal (16) et du système élastique auxiliaire (20, 19, 18) étant choisis de manière à induire dans le corps tubulaire (11) des forces dynamiques qui sont en opposition de phase avec celles induites par le bloc élastique principal (16) dans une plage de fréquences prédéterminées ;
caractérisé en ce que :
le système élastique auxiliaire (19, 20, 18) comprend au moins une paire d' éléments annulaires rigides (19, 20) qui sont coaxiaux avec la tige (14) et qui sont liés l'un à l'autre, au corps tubulaire (11) et à la tige (14) au moyen d'au moins trois éléments élastomères (18c, 18d, 18b) dont la raideur est choisie de manière à induire dans le corps tubulaire (11) des forces dynamiques qui sont en opposition de phase avec celles induites par le bloc élastique principal (16) dans la plage de fréquences prédéterminée ; en ce que la liaison entre le bloc principal (16), le système élastique auxiliaire (19, 20, 18) et la tige (14) est effectuée sensiblement en correspondance avec la première extrémité (14a) de cette dernière, qui est opposée à une seconde extrémité (14b) pour fixation au moteur (A) ; et en ce que le bloc principal (16) est lié à une extrémité (11a) du corps annulaire (11), dont ladite extrémité (11a) est voisine de la première extrémité (14a) de la tige (14), et le système élastique (19, 20, 18), est lié à l'extrémité opposée (11b) du corps tubulaire (11).

2. Montage selon la revendication 1, caractérisé en ce que lesdits éléments élastomères (18b, 18c, 18d) sont annulaires.

3. Montage selon la revendication 1, caractérisé en ce que le corps tubulaire (11) comporte un couvercle (13) qui possède un trou central pour le passage de la tige (14) et qui est monté sur le corps (11) en correspondance avec l'extrémité opposée (11b) de celui-ci par rapport à l'extrémité (11a) qui est fixée à la carrosserie (S), le couvercle (13) ayant un bord extérieur replié en forme de L (13b) à l'intérieur duquel le système élastique auxiliaire (18) est fixé.

4. Montage selon les revendications 1 et 3, caractérisé en ce que, lorsque le montage (10) est assemblé, la première extrémité (14a) de la tige (14) est filetée et est vissée dans un élément de liaison métallique (15) fixé de manière centrale au bloc élastique principal (16), un élément de liaison métallique auxiliaire (17) étant fixé de façon centrale au système élastique auxiliaire (18) et étant conçu pour être serré entre un épaulement (14c) de la tige, et l'élément de liaison métallique (15).

5. Montage selon les revendications 3 et 4, caractérisé en ce que le corps tubulaire (11) et/ou le couvercle (13) ont des trous (22, 23) pour permettre le retrait mécanique, après l'assemblage du montage (10), de certaines parties de matière des éléments annulaires rigides (19, 20) pour modifier leurs masses et pour optimiser la réponse en fréquence du montage aux vibrations transmises par le moteur à la carrosserie (S).
